(19) Europäisches Patentamt

European Patent Office

Office européen des brevets

(11) **EP 0 796 822 B1**

(12) **EUROPÄISCHE PATENTSCHRIFT**

(45) Veröffentlichungstag und Bekanntmachung des Hinweises auf die Patenterteilung:
**28.07.1999 Patentblatt 1999/30**

(51) Int. Cl.⁶: **C02F 1/28**, B01J 20/34

(21) Anmeldenummer: **97101884.1**

(22) Anmeldetag: **06.02.1997**

(54) **Verfahren zur Reinigung von organische Inhaltsstoffe enthaltenden Wässern**

Process for purifying water containing organic compounds

Procédé pour la purification des eaux contenant des composés organiques

(84) Benannte Vertragsstaaten:
**BE CH DE ES FR GB IT LI NL**

(30) Priorität: **19.03.1996 DE 19610673**
**19.03.1996 DE 19610676**

(43) Veröffentlichungstag der Anmeldung:
**24.09.1997 Patentblatt 1997/39**

(73) Patentinhaber:
**HÜLS AKTIENGESELLSCHAFT**
**45764 Marl (DE)**

(72) Erfinder:
• **Fast, Peter. Dr.**
**30171 Hannover (DE)**
• **Grund, Gerda, Dr.**
**48249 Dülmen (DE)**
• **Kahsnitz, John, Dr.**
**45721 Haltern (DE)**

(56) Entgegenhaltungen:
AT-B- 396 654          DD-A- 249 190
DE-A- 4 204 573        DE-A- 4 329 243
US-A- 2 769 751        US-A- 4 289 505

**Beschreibung**

Die Erfindung betrifft neue Verfahren zur Reinigung von organische Inhaltsstoffe enthaltenden Wässern mittels Adsorberharzen sowie ihre bevorzugte Verwendung.

Zur Reinigung von Grundwässern, Fabrikationsabwässern oder Prozeßwässern wird häufig ein adsorptives Verfahren eingesetzt. Dabei durchströmt das zu reinigende Wasser eine Schüttung aus einem körnigen Adsorptionsmittel, läßt die unerwünschten Inhaltsstoffe adsorptiv gebunden auf dem Adsorptionsmittel zurück und tritt gereinigt aus der Schüttung aus. Oft handelt es sich bei den unerwünschten Wasserinhaltsstoffen um organische Verbindungen, die mit Hilfe polymerer Adsorberharze entfernt werden.

Betriebliche Abwässer oder Prozeßwasser im Sinne der vorliegenden Beschreibung sind dabei alle Wasserströme oder Wassermengen, die in irgendeiner Form im Zusammenhang mit industriellen Fertigungsanlagen oder Fertigungsprozessen stehen und die infolgedessen mit unerwünschten Inhaltsstoffen verunreinigt sind, sei es dadurch, daß sie z. B. selbst Bestandteil eines Fertigungsprozesses sind oder daß sie nur indirekt wie z. B. Niederschlagswässer aus Behälter- oder Anlagentassen mit Fertigungsprozessen oder - anlagen in Berührung kommen Derartige Wasser sind oft mit umweltunverträglichen Schadstoffen verunreinigt, häufig mit organischen Verbindungen. Es gilt, diese Stoffe möglichst früh im Prozeßablauf bis auf kleine Restkonzentration zu entfernen.

Unter Grundwässern werden alle Formen von Grund-, Oberflachen-, Niederschlags-oder Sickerwässern und ähnlichem verstanden.

In "Neuere Verfahrenstechnologien in der Abwasserreinigung, Abwasser- und Gewasserhygiene", R. Oldenbourg Verlag München Wien 1984, werden auf den Seiten 235 bis 251 mehrere Methoden zur Behandlung von Chlorkohlenwasserstoffe enthaltendem Abwasser aus Chlorierungsanlagen beschrieben Nach einem Verfahren wird das Abwasser zunächst alkalisch eingestellt (pH 11). Die anschließende Strippung, die durch Einblasen von Wasserdampf im Gegenstrom durchgeführt wird, ergibt ein Destillat, das nach Kondensation in eine Chlorkohlenwasserstoff-Phase und eine wäßrige Phase zerfällt. Am Sumpf des Strippers (Oxistripper) fällt ein Abwasser an, das anschließend biologisch gereinigt wird.

In speziellen Fällen kann auch ein Abwasser mit einem pH-Wert von 1 bis 2 einer Strippung mit Wasserdampf im Gegenstrom unterworfen werden. Am Sumpf dieses Strippers fällt ein Wasser mit einem hohen Eisen- und Salzsäuregehalt an, das zur weiteren Aufarbeitung einer chemisch-mechanischen Kläranlage zugeführt wird.

Die Reinigung von Chlorkohlenwasserstoffe enthaltendem Niederschlagswasser aus Anlagen- und Behältertassen wird in der genannten Literaturquelle in einer Adsorberharzanlage durchgeführt. Dabei wird das Niederschlagswasser, nachdem es peinlichst von Feststoffen befreit wurde, durch ein Adsorberharz auf der Basis eines Divinylbenzol/Styrol-Copolymers geleitet. Zur Reaktivierung erfolgt eine Dampfdesorption. Da nach diesem Verfahren nach einem Jahr eine erhebliche Aktivitätsabnahme wegen irreversibler Eisenablagerungen zu verzeichnen war, wurde eine Neuanlage bei pH 1,5 betrieben.

Nach Technische Mitteilungen 77 (1984), 525 - 526, sind Styrol-Copolymere oder Polyacrylsäureester dazu geeignet, aliphatische und aromatische Kohlenwasserstoffe, chlorierte Kohlenwasserstoffe, Phenole, Pestizide und Tenside aus Abwässern zu entfernen. Die Reaktivierung der Harze erfolgt danach mit Wasserdampf. Bei Pestiziden wird jedoch mit Hilfe von Lösemitteln, wie Aceton oder Methanol, oder mit anorganischen Chemikalien reaktiviert.

In DD 249 190 wird mit organischen Substanzen verunreinigte Salzsäure, die aus Chlorierungsprozessen stammt, mit Hilfe von hydrophilen, nachvernetzten Divinylbenzol/Styrol-Copolymeren, die vorzugsweise eine innere Oberflache von 1 000 bis 1 600 $m^2/g$ aufweisen, gereinigt. Die Reaktivierung des Harzes erfolgt hier mit 130 °C heißem Wasserdampf, wobei die Desorption der gebundenen organischen Stoffe auch mit Lösemitteln, wie Alkoholen und Ketonen, vorgenommen werden kann.

Aus DE-P 44 33 225.4 ist ein Verfahren zur Reinigung von Grundwasser von organischen Bestandteilen bekannt, bei dem zunächst feste Bestandteile abgetrennt und die organischen Bestandteile anschließend an einem Adsorberharz adsorbiert werden. Nach der Desorption der organischen Bestandteile mit Wasserdampf kann das Adsorberharz bei Bedarf mit einer Säure regeneriert werden. Als Adsorberharze dienen bevorzugt Divinylbenzol/Styrol-Copolymere mit einer spezifischen Oberflache von 600 bis 1 200 $m^2/g$. Die Desorption mit Wasserdampf erfolgt vorzugsweise bei 100 °C bis 150 °C. Das bei der Desorption mit Wasserdampf entstehende Desorbat wird aufgefangen und kann einer Phasentrennung in eine wäßrige und eine organische Phase unterzogen werden. Die abgetrennte wäßrige Phase des Desorbats kann rückgeführt und dem zu reinigenden Grundwasser zugegeben werden, die organische Phase wird aus dem Prozeß ausgetragen. Insbesondere geeignete Methoden zum Entfernen von anorganischen Ablagerungen auf dem Harz - verursacht durch anorganische Inhaltsstoffe im Wasser - sind aus DE-P 44 33 225.4 bekannt.

DE-42 04 573 beschreibt schließlich ein adsorptives Verfahren zur Reinigung kontaminierter Grund-, Sicker-, Bodenwasch- und Oberflachenwasser, bei dem der Adsorber über die Apparatewandung bzw. durch geeignete Einbauten zusatzbeheizt sein kann, sowie geeignete Adsorberharze.

Neben der Grundwasserreinigung bietet sich also auch für die industrielle Abwasser-bzw. Prozeßwasserreinigung die Adsorption unerwünschter organischer Inhaltsstoffe mittels reaktivierbarer Adsorberharze an. Ziel einer solchen Abwasser- bzw. Prozeßwasserreinigung ist es, die organischen Inhaltsstoffe im Wasser so weit zu reduzieren, daß das so gereinigte Wasser unmittelbar wiederverwendet oder umweltverträglich abgegeben werden kann. Dafür geeignete Adsorberharze sind z. B. die erwähnten Copolymere auf Basis von Divinylbenzol/Styrol (z. B. Purasorb AP 250 der Fa. Purolite oder Amberlite XAD 4 der Fa. Rohm und Haas).

Betrachtet man jeweils nur einen einzelnen Adsorber, so erfolgt - unabhangig vom Gesamtverfahren - die adsorptive Wasserreinigung stets taktweise. Im Adsorptionstakt wird das Adsorberharz zunächst beladen. Im Adsorberharz lassen sich dabei in Strömungsrichtung drei Zonen unterscheiden: die gesättigte Zone am Eintritt des zu behandelnden Wassers in den Adsorber, in der das Harz unter den gegebenen Bedingungen die mit dem unbehandelten Wasser korrespondierende Gleichgewichtsbeladung erreicht hat; die eigentliche Adsorptionszone, in der die Beladung des Harzes vom Gleichgewichtswert auf die nach der Desorption verbleibende Restkonzentration im Harz (also den Frischzonenwert) absinkt; sowie die nahezu unbeladene Frischzone vor dem Austritt aus dem Adsorber. Mit zunehmender Beladung wandert die Adsorptionszone in Strömungsrichtung zum Ende des Adsorberbettes. Die Breite dieser Übergangszone ist von verschiedenen Parametern, wie z. B. der Strömungsgeschwindigkeit des zu behandelnden Wassers durch den Adsorber, abhängig. Ist die Frischzone aufgebraucht, droht ein Durchbruch des Adsorbers und der Adsorptionstakt ist beendet. Das Adsorberharz muß desorbiert werden.

Die Desorption kann auf unterschiedliche Weise erfolgen, z. B. mit Hilfe geeigneter Losemittel Eine weitere Möglichkeit der Reaktivierung, die bei der Wasserreinigung bevorzugt wird, besteht darin, die Adsorptionsmittelschuttung mit Wasserdampf zu spülen. Dabei gehen die adsorptiv gebundenen Schadstoffe in den Wasserdampf über, der anschließend kondensiert wird. Bei der Mehrzahl der bekannten Anwendungen erfolgt die Desorption auf diese Weise mit Wasserdampf bei 100 °C bis 150 °C. Um das Harz zu schonen, werden vorzugsweise Temperaturen von 110 °C bis 140 °C eingestellt.

Der Adsorber wird dabei üblicherweise zunächst mit vollentsalztem Wasser beaufschlagt, um das zu behandelnde Wasser aus dem Harz zu verdrängen. Des weiteren wird das vollentsalzte Wasser in der Regel - insbesondere bei Anlagen ohne Adsorberzusatzbeheizung - kontinuierlich erwärmt, wodurch das Adsorberharz schonend auf etwa die Desorptionstemperatur gebracht wird. Nach der Wasserdampf-Desorption erfolgt ein Abkühlen des Adsorberbettes mit vollentsalztem Wasser fallender Temperatur, um auch beim Abkühlen eine Beschädigung des Harzes durch Temperatursprünge zu vermeiden.

Es ist bekannt, das eingesetzte vollentsalzte Wasser dem zu behandelnden Wasser zuzusetzen. Der zur Desorption verwendete Wasserdampf wird nach Austritt aus dem Adsorber kondensiert und gewöhnlich auf ca. 35 °C bis 25 °C abgekühlt. Ist die desorbierte Menge an unerwünschten organischen Wasserinhaltsstoffen größer als im flüssigen Desorbat bei dieser Temperatur gelöst werden kann, bilden sich zwei Phasen (eine wasserarme organische Phase und eine wäßrige, mit organischen Inhaltsstoffen gesättigte Phase), die aufgrund ihrer unterschiedlichen Dichte in der Regel leicht separiert werden können. Das abgekühlte Desorbat wird daher gewöhnlich in einen Phasentrennbehälter geleitet, wo eine Schwerkraftabscheidung in eine wäßrige und eine organische Phase erfolgt. Die organische Phase stellt die aufkonzentrierte Schadstoff-Fracht dar und kann selektiv ausgeschleust werden. Die wäßrige Phase hingegen muß nachbehandelt werden. Es ist bekannt, auch diese Phase dem zu reinigenden Wasser beizugeben und so auf das Adsorberbett zu rezyklieren.

Die Aufarbeitung der zwar gesättigten, aber schadstoffarmen wäßrigen Phase, die bei der Reaktivierung anfällt, ist ein kritischer Punkt, der mit über die Wirtschaftlichkeit der adsorptiven Wasserreinigungsverfahren entscheidet. Bei z. B. verunreinigten Grundwässern liegt die Beladung mit unerwünschten Inhaltsstoffen in der Regel weit unter der Sättigungsgrenze, so daß die Hinzumischung der inhaltsstoffarmen (aber gesättigten) Wasserphase aus der Reaktivierung eine erhebliche Verdünnung dieser Phase und damit einen kostenträchtigen Exergieverlust bedeutet.

Des weiteren kann die Konzentration der unerwünschten Inhaltsstoffe z. B. in einem Grundwasser, insbesondere gegen Ende einer Sanierungsmaßnahme, so niedrig sein, daß sich im Kondensat des Reaktivierdampfes keine zwei Phasen bilden. Das Verhältnis der aus dem Rohwasser abgetrennten Inhaltsstoffmenge zu der mit dem Kondensat rezirkulierten Menge wird zunehmend ungünstiger. Es ist dann häufig ein Adsorptionsmittel wirtschaftlicher, das nach Erschöpfung nicht reaktiviert, sondern entsorgt und durch frisches ersetzt wir.

Das geschilderte herkömmliche Verfahren der Desorption mit Wasserdampf versagt auch, wenn z. B. das Adsorptiv selbst relativ gilt wasserlöslich ist und auch bei starker Kühlung nicht zwangsläufig eine Phasentrennung in eine wäßrige und eine organische Phase eintritt. Zwar ließe sich eine Stofftrennung auch dann durch geeignete Verfahren (z. B. Strippen o. ä.) erzielen; doch der Aufwand für ein derartiges Trennverfahren wurde die Wirtschaftlichkeit der adsorptiven Wasserreinigung stark beeinträchtigen.

Um also auch in solchen Fällen den Einsatz anderer aufwendiger Stofftrenn-oder gar Desorptionstechniken (z. B. den Einsatz von Lösemitteln inklusive der erforderlichen Nachbehandlungsschritte) vermeiden zu können, ist es Aufgabe der vorliegenden Erfindung, durch geeignete Verfahrensschritte das Phasentrennverhalten des Desorbats aus der Wasserdampf-Desorption zu verbessern, um adsorptive Wasserreinigungsverfahren ohne zusätzlichen Aufwand anwendbar und/oder wirtschaftlicher zu gestalten; und zwar insbesondere dann, wenn die unerwünschten organischen Inhaltsstoffe im zu reinigenden Wasser relativ gut wasserlöslich sind oder das Ausmaß der Verunreinigung nur (noch) gering ist.

Diese Aufgabe wird erfindungsgemäß gelöst durch ein Verfahren zur Reinigung von organische Inhaltsstoffe enthaltenden Wässern von organischen Inhaltsstoffen mittels Adsorberharzen gemäß Patentanspruch 1, wobei die Desorption der am Harz adsorbierten organischen Inhaltsstoffe mit Wasserdampf erfolgt, das dadurch gekennzeichnet ist, daß eine nach der Desorption mit Wasserdampf eines Adsorbers aus dem Desorbat abgetrennte wäßrige, mit organischen Inhaltsstoffen gesättigte Phase ohne Zumischen anderer Wasser auf zumindest einen in einem abgeschlossenen Adsorptionstakt durch das zu behandelnde Wasser bereits mit organischen Inhaltsstoffen beladenen Adsorber aufgegeben wird. Bei diesem beladenen Adsorber (bzw. diesen beladenen Adsorbern) kann es sich sowohl um - ggf. gemeinsam mit anderen - den gleichen Adsorber handeln, aus dem die wäßrige Desorbatphase stammt, als auch um einen oder mehrere andere bereits beladene Adsorber. Die Beaufschlagung kann im Gleich- oder im Gegenstrom zur Strömungsrichtung des zu reinigenden Wassers durch den Adsorber erfolgen. Vorzugsweise wird die wäßrige Phase im Gegenstrom zur Strömungsrichtung des zu reinigenden Wassers bei der adsorptiven Reinigung durch den bzw. die Adsorber geleitet.

Überraschenderweise läßt sich durch das erfindungsgemäße Verfahren durch unterschiedliche Effekte die Beladung eines Adsorbers mit organischen Inhaltsstoffen über den Punkt hinaus, an dem bei Beaufschlagung mit dem zu behandelnden Rohwasser der Druchbruch auftritt, erhöhen, so daß bei der nachfolgenden Desorption mit Wasserdampf ein vermehrt organische Inhaltsstoffe enthaltendes Desorbat mit verbesserter Neigung zur Zweiphasigkeit anfallt.

In vielen Fällen, insbesondere aber bei nur geringfügig verunreinigten Wässern, ist die Konzentration an organischen Inhaltsstoffen in der wäßrigen Phase des Desorbates hoher als im zu reinigenden Rohwasser. Die erreichbare Beladung eines Adsorberharzes ist aber unter anderem abhängig von der Konzentration der zu entfernenden Inhaltsstoffe im zu behandelnden Rohwasser. Bei sonst gleichen Bedingungen wächst diese Beladung mit zunehmender Verunreinigung des zu behandelnden Wassers. Durch die erfindungsgemäße Aufgabe der stärker als das Rohwasser verunreinigten wäßrigen Phase des Desorbates auf einen nur durch Rohwasser beladenen Adsorber kann so die Beladung dieses Adsorbers weiter erhöht werden.

Unabhängig von diesem Effekt (bzw. ggf. erganzend) wird erfindungsgemäß vorzugsweise auch die Strömungsgeschwindigkeit der wäßrigen Desorbatphase durch den Adsorber im Vergleich zur Strömungsgeschwindigkeit des Rohwassers verringert nämlich vorzugsweise auf ca. 80 bis 20 % der Rohwassergeschwindigkeit. Auch bei quasi - kontinuierlich arbeitenden Mehr-Bett-Ausführungen ist dies in der Regel wegen der unterschiedlichen Durchsatzmengen in den verschiedenen Arbeitstakten problemlos möglich. Durch die entsprechend der verringerten Strömungsgeschwindigkeit verlängerte Kontaktzeit wird die Breite der Adsorptionszone (d. h. der Ubergangszone, in der die Beladung vom Gleichgewichtswert auf der) Restwert nach Desorption absinkt) verringert, so daß die Beladung insgesamt steigt. Bevorzugt werden die Adsorptionsbedingungen so gewählt, daß bei der erfindungsgemäßen Ruckführung der wäßrigen Phase aus dem Desorbat auf den Adsorber die Austrittskonzentration an organischen Inhaltsstoffen in dieser wäßrigen Phase die Rohwasser-Konzentration nicht überschreitet, so daß die durch die erfindungsgemäße Rückführung gereinigte wäßrige Phase aus dem Desorbat dem Rohwasser zugegeben werden kann.

Durch die erfindungsgemäße Rückführung einer mit organischen Inhaltsstoffen gesättigten wäßrigen Phase, die aus dem Desorbat eines vorhergehenden Zyklus abgetrennt wird, auf zumindest einen beladenen Adsorber, dessen Frischzone durch die adsorptive Wasserreinigung bereits verbraucht ist und der sich also kurz vor dem Durchbruch befindet, vorzugsweise im Gegenstrom zur Strömungsrichtung des zu reinigenden Wassers wird außerdem eine erhohte Beladung des Adsorberharzes vor allem auch im Bereich der Übergangszone erzielt. Auch dadurch wird bei der anschließenden Wasserdampf-Desorption des Adsorbers der Anteil an organischen Inhaltsstoffe im Desorbat erhöht und die Phasentrenneigung bei Abkühlung des Desorbats erhöht. Auf diese Weise laßt sich auch bei relativ gut wasserlöslichen organischen Inhaltsstoffen in den zu reinigenden Wässern eine ausreichende Phasentrennung des Desorbates durch Abkühlen erzielen, die eine adsorptive Wasserreinigung mit Wasserdampfdesorption wirtschaftlich arbeiten läßt.

Vorzugsweise wird das Adsorberharz bei der Desorption ergänzend zusatzbeheizt. Dadurch kann die zur Desorption erforderliche Wasserdampfmenge zusatzlich reduziert werden.

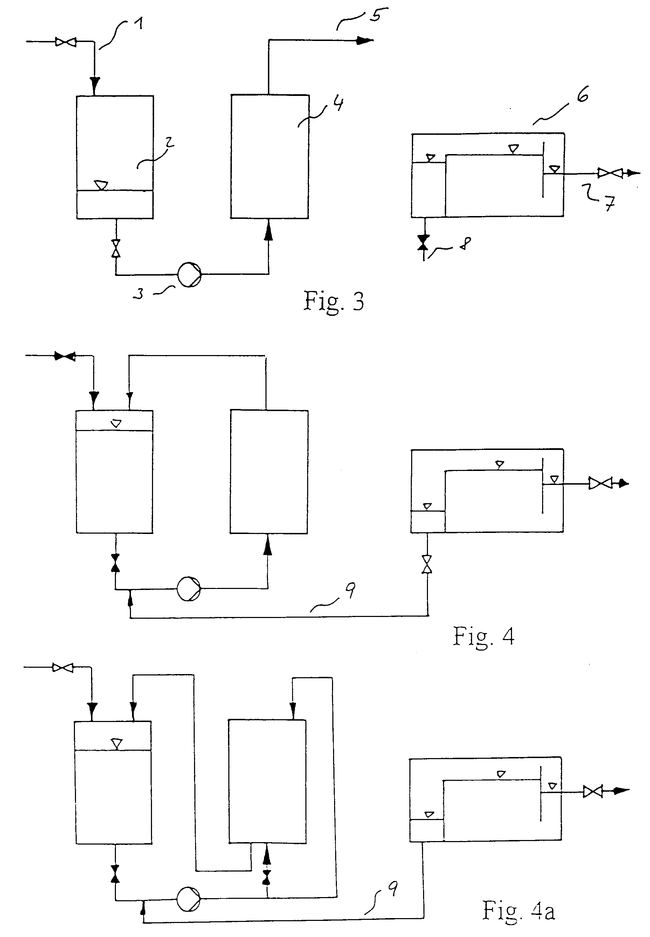

Ein weiterer Vorteil des erfindungsgemäßen Verfahrens ergibt sich, wenn Rohwasser gereinigt werden muß, das solche Inhaltsstoffe enthält, die bei Erwärmung auf Desorptionstemperatur feste Beläge auf dem Adsorberharz abscheiden (z. B. Wasserstein). In diesem Fall muß das Rohwasser aus dem Adsorber durch Wasser verdrangt werden, das diese Inhaltsstoffe nicht enthält. In der Regel wird dazu vollentsalztes Wasser verwandt. Bei dem erfindungsgemäßen Verfahren wird die Verdrangung des zu Ablagerungen neigenden Wassers durch das schadstoffgesättigte Desorbat bewirk (Fig. 4, 4a), so daß der Einsatz von vollentsalztem Wasser entfallen kann.

Das erfindungsgemäße Verfahren mit der Aufgabe der waßrigen Phase aus dem Desorbat auf einen beladenen Adsorber wird wie die adsorptive Reinigung des zu behandelnden Wassers in der Regel bei 15 °C bis 35 °C durchgefuhrt und führt dabei wie beschrieben in jedem Fall zu einer höheren Beladung der Adsorber und zu einer verbesserten Phasentrenneigung im kondensierten Desorbat.

Zum Start des Verfahrens wird das erste anfallende Wasserdampf-Desorbat entweder soweit abgekühlt, daß eine wäßrige Phase aus dem Desorbat abgetrennt werden kann, die erfindungsgemäß auf einen beladenen Adsorber rückgeführt werden kann, oder das abgekühlte Desorbat selbst wird ohne Phasentrennung auf einen beladenen Adsorber rückgeführt. In jedem Fall wird die Beladung zumindest eines bereits in einem Adsorptionstakt beladenen Adsorbers so erhöht, daß bei der anschließenden Desorption dieses Adsorbers ein Desorbat mit erhöhter Phasentrenneigung anfällt, aus dem durch Abkühlen eine wäßrige Phase gewonnen werden kann. Bei Wasserreinigungsmaßnahmen wie z. B. der Grundwassersanierung, wo erst gegen Ende der Maßnahme die genannten Probleme durch die geringer werdende Konzentration unerwünschter Inhaltsstoffe entstehen, entfällt das Problem der Startphase für das erfindungsgemäße Verfahren.

Das erfindungsgemäße Verfahren kann kontinuierlich oder diskontinuierlich in Ein-oder Mehr-Bett-Ausführung durchgeführt werden. Erforderlich ist lediglich eine einfache Phasentrenneinrichtung - vorzugsweise ein Schwerkraftabscheidebehälter -, in der das Desorbat nach Abkühlung auf bevorzugt ca. 0 °C bis 35 °C (maßgeblich ist hier in der Regel die Temperatur des verfügbaren Kühlwassers), besonders bevorzugt 3 °C bis 15 °C, aufgefangen, bedarfsgerecht zwischengelagert und getrennt werden kann, sowie geeignete Einrichtungen zur erfindungsgemäßen Ruckführung der wäßrigen Desorbatphase. Zur Kühlung des Desorbates dient gewohnlich ein herkömmlicher Wärmeübertrager, wobei die Kühlung vorzugsweise nur wahrend des Desorptionstaktes in Betrieb genommen wird.

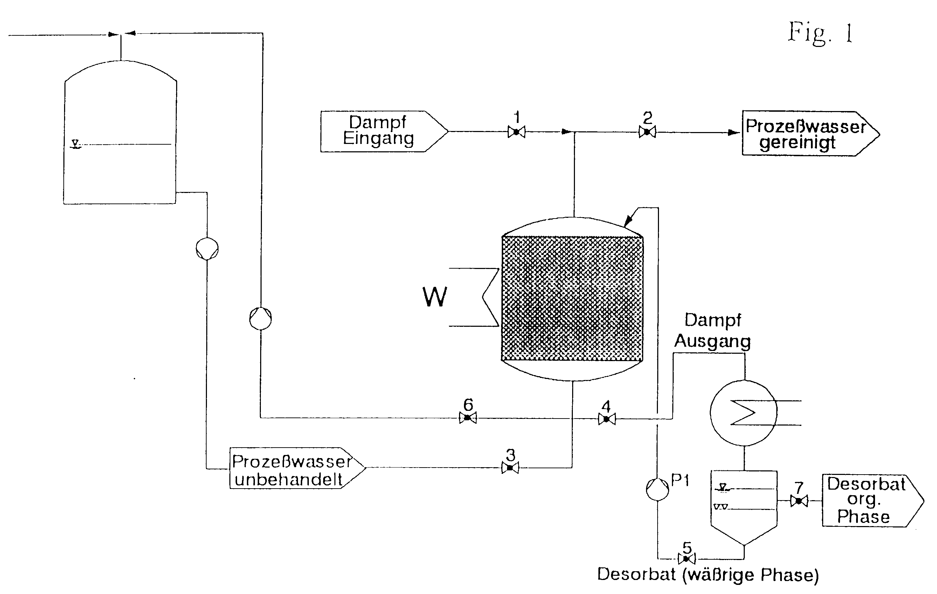

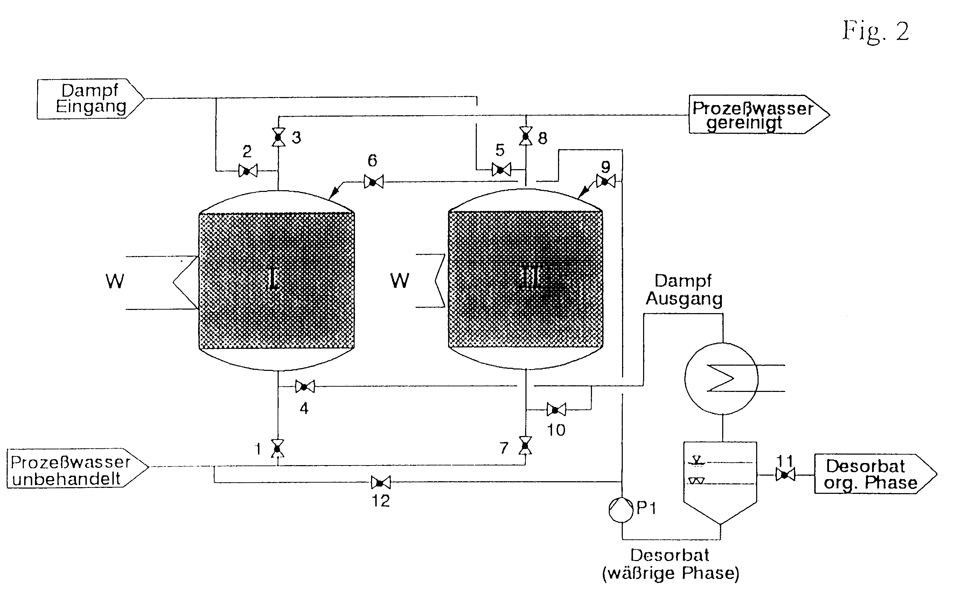

Die erfindungsgemäß rückgeführte und aufgegebene wäßrige Phase aus dem Desorbat kann bevorzugt wie erwähnt nach Durchlauf - vorzugsweise im Gegenstrom - durch zumindest ein beladenes Adsorberbett dem zu reinigenden Wasser zugeführt werden; beispielsweise kann sie bei einem Ein-Bett-Verfahren wie in Fig. 1 dem Vorratstank für das zu reinigende Wasser zugeführt werden. Sie kann aber auch zunächst in die Phasentrenneinrichtung zurückgefuhrt werden und von dort aus vorzugsweise dem zu reinigenden Wasser beigemischt werden (vgl. Fig. 2).

Die abgetrennte organische Phase aus dem Desorbat stellt die aufkonzentrierte Schadstofffracht dar und kann selektiv aus dem Prozeß ausgeschleust und z. B. entsorgt werden.

Das erfindungsgemäß gereinigte Wasser kann im Falle von Prozeßwasser oder Abwasser in den Prozeßablauf rückgeführt, anderweitig verwendet oder zur weiteren Klärung abgegeben werden. Gereinigtes Grundwasser kann umweltverträglich rückgeführt oder in den Vorfluter abgeleitet werden.

Durch eine bevorzugte Zusatzbeheizung des Adsorberharzes bei der Desorption kann die eingesetzte Wasserdampfmenge auf das zur Desorption der organischen Inhaltsstoffe erforderliche Maß, das in geeigneten Vorversuchen für den Fachmann leicht feststellbar ist, reduziert werden. Es bietet sich an, die Zusatzbeheizung vor der Wasserdampf-Desorption in Betrieb zu nehmen, um das Harz nicht über den Wasserdampf aufheizen zu müssen. Das dabei entstehende Desorbat enthält durch den geringeren Dampfverbrauch anteilig vermehrt organische Inhaltsstoffe, durch die die Neigung des Desorbates zur Bildung einer wäßrigen und einer organischen Phase weiter verbessert wird.

Die Zusatzbeheizung des Adsorberharzes erfolgt bevorzugt durch eine Mantelbeheizung des Adsorbers oder in das Harz eingebrachte innenbeheizte Rohrschlangen. Als Heizmedium bieten sich insbesondere Wasserdampf, aber auch andere herkömmliche Wärmeträger an. Auch eine elektrische Beheizung ist möglich. Bei den ungünstigen Oberflache/Volumen-Verhältnissen von Großapparaten muß ggf. auf Rohrbündelapparate zurückgegriffen werden.

Die Grenzen zumindest der wirtschaftlich sinnvollen Anwendbarkeit des erfindungsgemäßen Verfahrens sind gewöhnlich erreicht, wenn sich trotz wirtschaftlich noch vertretbarer Abkühlung des Desorbats bei gegebenen zu entfernenden organischen Inhaltsstoffen (mit gegebener Wasserlöslichkeit) keine ausreichende Phasentrennung durch Schwerkraftabscheidung oder andere geeignete, wirtschaftlich vertretbare Verfahren zur Phasentrennung erzielen läßt. In Kenntnis der herkömmlichen Adsorptionsverfahren sowie der erfindungsgemäßen Methoden kann der Fachmann auf einfache Weise z. B. in Vorversuchen sowohl die Grenzen der Anwendbarkeit bei gegebenen zu reinigenden Wässern ermitteln als auch die verfahrenstechnische Auslegung optimieren. Hierbei kann sich auch eine Beschränkung für das Maß an noch tolerierbarer Wasserlöslichkeit der im Wasser vorhandenen organischen Inhaltsstoffe ergeben. Mit Hilfe der erfindungsgemäßen Verfahren lassen sich innerhalb dieser Grenzen sehr geringe Restkonzentrationen an organischen Inhaltsstoffen im behandelten Wasser von in der Summe größenordnungsmäßig ca. 10 µg/l erreichen, die mit den erzielbaren Restkonzentrationen herkömmlicher Adsorptionsverfahren zur Wasserreinigung vergleichbar sind.

Die hohe Wirtschaftlichkeit des erfindungsgemäßen Verfahrens im Vergleich zu Alternativverfahren erweist sich einerseits beispielsweise bei der Reinigung von betrieblichen Ab- oder Produktionswässern, die zumindest teilweise mit relativ gut wasserlöslichen organischen Inhaltsstoffen beladen sind. Das erfindungsgemäße Verfahren ist aber auch bei schlecht wasserlöslichen organischen Inhaltsstoffen anwendbar und kann auch dabei je nach den Gegebenheiten Vorteile bieten (z. B. bei niedrigerer Eingangskonzentration der im Wasser enthaltenen organischen Inhaltsstoffe). Die hohe Wirtschaftlichkeit des erfindungsgemäßen Verfahrens im Vergleich zu Alternativverfahren erweist sich andererseits nämlich auch insbesondere bei der Reinigung von Wässern, die nur relativ geringfügig mit organischen Inhaltsstoffen beladen sind.

Als organische Inhaltsstoffe kommen erfindungsgemäße insbesondere alle aus chemischen Prozessen bekannten Organika in Betracht, insbesondere z. B. aliphatische $C_4$- bis $C_{12}$-Kohlenwasserstoffe, wie Pentan, Hexan, Cyclohexan, Octan. Isooctan oder Decan, cyclische Polyene wie z. B. Cyclopentadien, aromatische Kohlenwasserstoffe, wie Benzol, Toluol oder Xylol, Phenole, organische Sauren, Ester sowie Halogenkohlenwasserstoffe. Dazu gehören Chlorkohlenwasserstoffe wie Chloroform, Tetrachlorkohlenstoff, 1,2-Dichlorethan oder 1,2-Dichlorpropan, bromierte Kohlenwasserstoffe, wie Bromchlormethan, Bromoform oder Brombenzol, und Fluorchlorkohlenwasserstoffe, wie z. B. Trifluorchlormethan. Ferner können im zu behandelnden Wasser enthalten sein:

- Ether wie beispielsweise Dibutylether, Tetrahydrofuran, p-Toluylether oder halogenierte aliphatische Ether, wie Di(chlorisopropyl)ether oder Di(chlorethyl)ether, sowie
- polycyclische aromatische Kohlenwasserstoffe wie beispielsweise Naphthalen, Acenaphthylen, Acenaphthen, Fluoren, Phenanthren, Anthracen, Fluoranthen, Pyren oder Chysen.

Die organischen Inhaltsstoffe können einzeln oder in beliebigen Kombinationen im zu reinigenden Wasser vorliegen.

Geeignete Adsorberharze sind vor allem Divinylbenzol/Styrol-Copolymere, wobei Produkte mit einer spezifischen Oberfläche von 600 bis 1200 m$^2$/g und im besonderen von 700 bis 900 m$^2$/g bevorzugt werden Verwendbar sind jedoch auch andere Polymere, die bevorzugt neutrale organische Verbindungen adsorbieren können.

Die Adsorption erfolgt im allgemeinen bei 15 bis 35 °C. Die Desorption mit Wasserdampf wird meist bei 100 bis 150°C durchgeführt. Um das Harz zu schonen, werden dabei vorzugsweise Temperaturen von 110 bis 140 °C eingestellt.

Da es bei der adsorptiven Reinigung von Wässern mit anorganischen Inhaltstoffen und nicht eingestelltem pH-Wert zu Ablagerungen auf dem Harz kommen kann, muß in diesen Fällen ggf. in regelmäßigen Abständen eine Entfernung von anorganischen Ablagerungen vorgenommen werden, vgl. DE-P 44 33 225.4. Sauren, die zur Regenerierung des Adsorberharzes eingesetzt werden können, sind vor allem Mineralsauren, wie Salz-, Schwefel- und Phosphorsaure. Es können aber auch starke organische Säuren, wie Ameisen- und Essigsäure, verwendet werden Vorzugsweise setzt man eine 10- bis 20 %ige Salzsäure ein und regeneriert bei 20 bis 80 °C. Hierbei wird ein sauerstoffhaltiges Gas, bevorzugt Luft, im Gegenstrom eingeleitet .

Die Regenerierung ist nicht nach jedem Adsorptions-Desorptions-Zyklus erforderlich, sondern erst dann, wenn die Adsorptionskapazität des Harzes nachläßt. Eine Regenerierung wird meist nach 30 bis 80 Zyklen vorgenommen, wobei bei einem sauren seltener als bei einem neutralen Wasser regeneriert werden muß.

Wenn die zu behandelnden Wässer das Adsorberharz in einer Säule beispielsweise von unten nach oben durchströmen, so wird der Wasserdampf wahrend der Desorptionsphase vorzugsweise in Gegenrichtung, also von oben nach unten, geführt. Bei der Regenerierung wird das sauerstoffhaltige Gas unterhalb der Harzschicht eingeleitet.

Hohe Standzeiten des Harzes werden auch in diesen Fällen erreicht, da unvermeidliche Ausfällungen von anorganischen Ablagerungen am Adsorberharz durch regelmäßiges Spülen mit wäßriger Säure wieder entfernt werden.

Enthalten die zu behandelnden Wasser feste Bestandteile (z. B. Polymerisate), so kann die Abtrennung dieser Bestandteile, vor allem von Schwebstoffen, vor dem Adsorber durch Filtration erforderlich sein. Dabei sind vor allem Sand-, aber auch Stoff-und Papierfilter geeignet. Das zu reinigende Wasser kann bei der adsorptiven Reinigung bei seinem ursprünglichen pH-Wert belassen werden. Vorzugsweise liegt der pH-Wert bei 1 bis 8, wobei pH-Werte von 3 bis 7,5 besonders bevorzugt werden. Der pH-Wert kann auch von der adsorptiven Reinigung gezielt eingestellt werden.

Das erfindungsgemäße Verfahren ist vorzugsweise geeignet zur adsorptiven Reinigung von Grundwässern oder von betrieblichen Prozeßwässern bzw. Abwassern in der chemischen Industrie.

Die Figuren 1 und 2 zeigen beispielhafte Ausführungen der erfindungsgemäßen Verfahren, die in den Beispielen 1 und 2 näher beschrieben werden Figur 1 zeigt eine Ein-Bett-Ausführung; Figur 2 eine Zwei-Bett-Ausführung. Zu erkennen sind jeweils in der Bildmitte die hier elektrisch zusatzbeheizten Adsorber (schraffiert) sowie die Leitungsführung für das zu behandelnde Prozeßwasser im Adsorptionstakt bzw. die Leitungsführung für den Wasserdampf in der Desorptionsphase. Das Desorbat wird über die mit "Dampf Ausgang" gekennzeichneten Leitungen über einen Wärmeübertrager zur Abkühlung in einen Schwerkraftscheidebehälter geleitet und dort in eine organische und eine wäßrige Phase getrennt. Es wird hier davon ausgegangen, daß die organische Phase eine geringere Dichte als die wäßrige Phase hat. (Auch der umgekehrte Fall ist jedoch möglich.) Die organische Phase des Desorbats wird ausgeschleust; die wäßrige Phase kann von hieraus über die Leitungen "Desorbat (wäßrige Phase)" erfindungsgemäß rückgeführt und auf ein beladenes Adsorberbett aufgegeben werden. Die dabei anfallende bearbeitete wäßrige Phase kann wie in Figur 1 über Ventil 6 dem Vorratsbehälter für das zu reinigende Prozeßwasser zugeführt werden (links in Fig. 1); in Figur 2 wird sie über Ventil 4 oder 10 über den Wärmeübertrager zunächst zurück in den Trennbehälter und von dort über Ventil 12 zu dem zu reinigenden Prozeßwasser geleitet. Die Zahlen 1 bis 7 in Fig. 1 bzw. 1 bis 12 in Fig. 2 bezeichnen Ventile, die zur Steuerung der verschiedenen Stoffströme in den unterschiedlichen Arbeitstakten benötigt werden. Der Ablauf der Arbeitstakte ist in den Beispielen 1 und 2 näher erläutert.

Das erfindungsgemäße Verfahren wird durch die nachfolgenden Beispiele näher erläutert, ohne darauf beschränkt zu sein:

Beispiele

**Beispiel 1**: Ein-Bett-Verfahren

Bei kleinen Prozeßabwasservolumenströmen (möglicherweise diskontinuierlicher Anfall) bietet sich aus wirtschaftlichen Gründen ein Ein-Bett-Verfahren an (siehe Fig. 1).

Schaltfolge:

| Schritt 1 | Adsorption des Prozeßwassers |
| | Ventil: 2, 3 geöffnet |
| | Ventil: 1, 4, 5, 6, 7 geschlossen |

| Schritt 2 | Ausschleusen der organischen Phase |
| | Ventil: 7 geöffnet |
| | Ventil: 1, 2, 3, 4, 5, 6 geschlossen |

| Schritt 3 | Adsorption der wäßrigen Phase des Desorbats |
| | Pumpe P1 an |
| | Ventil: 5, 6 geöffnet |
| | Ventil: 1, 2, 3, 4, 7 geschlossen |

| Schritt 4 | Desorption des Bettes |
| | Pumpe P1 aus |
| | Beheizung in Betrieb nehmen |
| | Ventil: 1, 4 geöffnet |
| | Ventile: 2, 3, 5, 6, 7 geschlossen |
| | Beheizung nach erfolgter Desorption außer Betrieb. |

Der Zyklus ist damit beendet, der Adsorptionsvorgang beginnt anschließend erneut mit Schritt 1.

**Beispiel 2**: Zwei-Bett-Verfahren

Bei höheren Volumenströmen, bei denen eine kontinuierliche Reinigung notwendig ist, muß auf das aufwendigere Zwei-Bett-Verfahren zurückgegriffen werden (s. Fig. 2).

Schaltfolge:

| Schritt 1 | Adsorption des Prozeßwassers (Bett I), Rezyklierung der wäßrigen Phase des Desorbats (Bett II) |
| | Ventil: 1, 3, 9, 10 geoffnet |
| | Ventile: 2, 4, 5, 6, 7, 8, 11, 12 geschlossen |

| Schritt 2 | Beimischen der wäßrigen Phase zum zu reinigenden Prozeßwasser |
| | Ventil: 1, 3, 12 geöffnet |
| | Ventil: 2, 4, 5, 6, 7, 8, 9, 10, 11 geschlossen |

| Schritt 3 | Adsorption des Prozeßwassers (Bett I), Desorption (Bett II) |
| | Beheizung Bett II in Betrieb nehmen |
| | Ventil: 1, 3, 5, 10 geöffnet |
| | Ventil: 2, 4, 6, 7, 8, 9, 11, 12 geschlossen |

| Schritt 4 | Adsorption des Prozeßwassers (Bett I), Abkühlung (Bett II), |

Phasentrennung und Ausschleusung org. Phase (B1)
Beheizung Bett II außer Betrieb nehmen
Ventil: 1, 3, 11 geöffnet
Ventil: 2, 4, 5, 6, 7, 8, 9, 10, 12 geschlossen

Schritt 5 Adsorption des Prozeßwassers (Bett II), Rezyklierung der wäßrigen Phase des Desorbats (Bett I)
Ventil: 4, 6, 7, 8 geoffnet
Ventil: 1, 2, 3, 5, 9, 10, 11, 12 geschlossen

Schritt 6 Beimischen der wäßrigen Phase zum zu reinigenden Prozeßwasser
Ventil: 7, 8, 12 geöffnet
Ventil: 1, 2, 3, 4, 5, 6, 9, 10, 11 geschlossen

Schritt 7 Adsorption des Prozeßwassers (Bett II), Desorption (Bett I)
Beheizung Bett I in Betrieb nehmen
Ventil: 2, 4, 7, 8 geoffnet
Ventil: 1, 3, 5, 6, 9, 10 11, 12 geschlossen

Schritt 8 Adsorption des Prozeßwassers (Bett II), Abkühlung (Bett I),
Phasentrennung und Ausschleusung org. Phase (B1)
Beheizung Bett I außer Betrieb nehmen
Ventil: 7, 8,11 geöffnet
Ventil: 1, 2, 3, 4, 5, 6, 9, 10, 12 geschlossen

Der Zyklus ist damit beendet, der Adsorptionsvorgang beginnt anschließend erneut mit Schritt 1.

**Beispiel 3**: <u>Prozeßwasserreinigung</u>

Gemäß Figur 1 wurde ein verunreinigtes Prozeßwasser uber einen Feststoff-Filter auf einen Adsorber (Durchmesser 4,4 cm, Höhe 1,5 m) geleitet. Die Adsorption wurde bei 20 °C, einem Volumenstrom von 20 l/h am Harz Purasorb AP 250 durchgeführt. Erfindungsgemäß wurde die wäßrige Phase eines Desorbates auf den beladenen Adsorber rezykliert. Dieses stellt den Zustand nach erfolgter Adsorption und darauffolgender Aufkonzentrierung der Schadstoff-Fracht auf dem Adsorbens (Ende Schritt 3 des Ein-Bett-Verfahrens bzw. Schritt 1 bzw. 5 des Zwei-Bett-Verfahrens) dar.
Die Verunreinigungen des Prozeßwassers waren alkylierte cyklische Ether wie z. B. Methyltetrahydrofuran und chlorierte cyklische Acetale wie 2-(Chlormethyl)-1,3-dioxolan.

Desorption:

- das Bett wurde durch den Mantel elektrisch auf $T_{HARZ}$ von ca. 130 °C aufgeheizt,
- nach Öffnen des Ausgangsventils wurde eine 2-phasige Desorbat-Losung erhalten, die bis zu 30 Gew.-% der Schadstoff-Fracht beinhaltete (in der organischen Phase).
- der Dampf wurde sehr langsam mit einem Massenstrom von ca. 10 g/min etwa 70 Minuten lang dosiert, um die restliche Fracht (Beladung) zu desorbieren.

Das Desorbat wurde in einem Schwerkraftabscheidebehälter aufgefangen und in eine wäßrige und eine organische Phase getrennt. Die wäßrige Phase wurde erfindungsgemäß weiterbehandelt. Die organische Phase wurde ausgeschleust.
Vergleicht man den Dampf-Verbrauch (V) während der Desorption mit und ohne vorgeschalteter elektrischer Beheizung ergeben für die o. g. Adsorption folgende Werte:

mit Beheizung des Bettes V= 515 g Dampf/l kg Harz
ohne Beheizung des Bettes V = 1 670 g Dampf/l kg Harz.

Die Temperatur des Harzes während der Desorption lag in beiden Fallen bei ca. 140°C.
(Die folgenden Beispiele 4 und 5 beziehen sich auf die Figuren 3 bis 5.)

**Beispiel 4**:

Ein mit 150 mg/l durch halogenierte Kohlenwasserstoffe (als Schadstoffe) verunreinigtes Wasser [Rohwasser (1)] wird mit einem Volumenstrom von 160 $m^3$/h durch ein Festbett (4) geleitet, das 11 000 kg eines Adsorptionsmittels (ein makroporöses polymeres Absorberharz wie z. B. Amberlite XAD-4 der Fa. Rohm und Haas) enthalt (s. Fig. 3). Nach etwa 6 h beginnt die Konzentration von Kohlenwasserstoffen im austretenden Wasser [Reinwasser (5)] anzusteigen. Der Rohwasserzustrom wird unterbrochen. Die Beladung des Adsorptionsmittels mit Schadstoffen beträgt zu diesem Zeitpunkt

$$6h \cdot 160\ m^3/h \cdot 150\ mg/l \cdot 1\ 000\ l/m^3 = 144\ kg.$$

Dies entspricht 1,31 % der Masse des Adsorptionsmittels.

Nun werden 25 $m^3$ des mit Schadstoffen gesättigten (ca. 2 500 mg/l) Kondensates, das bei der vorangegangenen Regeneration als leichtere Phase (8) im Schwerkraftabscheider (6) angefallen ist und gespeichert wurde, in 1 h durch das Festbett in die Rohwasservorlage (2) geleitet. Je nachdem, ob das Kondensat in gleicher (Fig. 4) oder entgegengesetzter Richtung (Fig. 4a) wie das Rohwasser durch das Bett geleitet wird, hat das austretende Wasser eine geringere oder annähernd gleiche Konzentration wie das Rohwasser. Nach Passage des Kondensats betragt die Beladung des Adsorptionsmittels näherungsweise

$$144\ kg + 25\ m^3 \cdot 2\ 500\ mg/l \cdot 1\ 000\ l/m^3 = 206,5\ kg.$$

Das entspricht 1,88 % der Masse des Adsorptionsmittels.

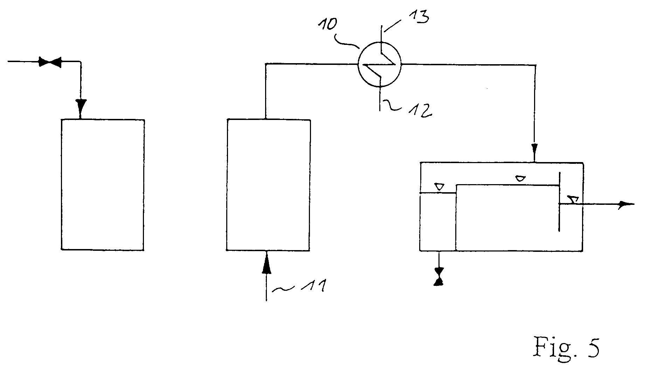

Anschließend wird das Festbett in bekannter Weise mit Dampf reaktiviert (Fig. 5). Dabei erhalt man 144 kg reine Schadstoffphase und 25 000 kg Kondensat mit 2 500 mg/l Schadstoffgehalt.

**Beispiel 5:**

Das Festbett (4) aus dem ersten Beispiel werde mit ebenfalls 160 $m^3$h Rohwasser durchströmt. Die Schadstoffkonzentration an halogenierten Kohlwasserstoffen betrage jedoch 5 mg/l. Das Bett sei nach 6 h erschöpft. Die Fracht des Bettes betragt dann 4,8 kg, entsprechend 0,044 % der Masse des Bettes. Bei der vorangegangenen Reaktivierung sind 15 $m^3$ Kondensat mit 2 500 mg/l angefallen, die nun, wie in Beispiel 1, im Gleich- (Fig. 4) oder Gegenstrom (Fig 4a) durch das Festbett geleitet werden. Das austretende Wasser hat eine Schadstoffkonzentration, die kleiner (Gleichstrom) als die Rohwasserkonzentration oder annähernd ebensogroß (Gegenstrom) wie die Rohwasserkonzentration ist. Nach Passage des Kondensats betragt die Beladung des Adsorptionsmittels näherungsweise

$$4,8\ kg + 15\ m^3 \cdot 1\ 000\ l/m^3 \cdot 2\ 500\ mg/l = 42,3\ kg,$$

was 0,38 % der Masse des Festbettes entspricht. Anschließend wird das Bett in bekannter Weise mit Dampf regeneriert, wobei 4,8 kg reine Schadstoffphase und 15 000 kg gesättigte, wäßrige Phase mit 2 500 mg/l Schadstoffen im Schwerkraftabscheider abscheider anfallen. Zeichenerklärung zu den Figuren 3 bis 5:

1 Rohwasserzufuhr

2 Rohwasservorlage

3 Rohwasserpumpe

4 Adsorber

5 Reinwasseraustritt

6 Schwerkraftabscheider

7 Schadstoffphase zur Entsorgung

8 schadstoffgesättigte, wäßrige Phase

9 Rezirkulation der wäßrigen Phase

10 Kondensator und Unterkühler

11 Dampfzufuhr

12 Kühlwasserzufuhr

13 Kühlwasserabfuhr

⋈ offenes Ventil

⋈ geschlossenes Ventil

**Patentansprüche**

1. Verfahren zur Reinigung von organische Inhaltsstoffe enthaltenden Wässern von organischen Inhaltsstoffen mittels Adsorberharzen, wobei die Desorption der am Harz adsorbierten organischen Inhaltsstoffe mit Wasserdampf erfolgt,
dadurch gekennzeichnet,
daß eine nach der Desorption mit Wasserdampf eines Adsorbers aus dem Desorbat abgetrennte mit organischen Inhaltsstoffen gesättigte, wäßrige Phase ohne Zumischen anderer Wässer auf zumindest einen mit den organischen Inhaltsstoffen beladenen Adsorber aufgegeben wird, dessen Adsorptionstabt abgeschlossen ist.

2. Verfahren nach Anspruch 1,
dadurch gekennzeichnet,
daß die wäßrige Phase aus dem Desorbat im Gegenstrom zur Strömungsrichtung des zu reinigenden Wassers bei der adsorptiven Reinigung durch den Adsorber geleitet wird.

3. Verfahren nach Anspruch 1 oder 2,
gekennzeichnet durch
eine Zusatzbeheizung des Adsorbers in Begleitung zur Wasserdampf-Desorption.

4. Verfahren nach Anspruch 3,
dadurch gekennzeichnet,
daß die Zusatzbeheizung elektrisch, mit Wasserdampf oder durch separate Wärmeträgerkreisläufe erfolgt.

5. Verfahren nach Anspruch 4,
gekennzeichnet durch eine Mantelbeheizung des Adsorbers oder eine im Adsorber angeordnete beheizte Rohrschlange oder beides.

**6.** Verfahren nach zumindest einem der vorherigen Ansprüche,
dadurch gekennzeichnet,
daß die Strömungsgeschwindigkeit der wäßrigen Phase durch den beladenen Adsorber kleiner als zuvor die Strömungsgeschwindigkeit des zu behandelnden Wassers ist.

**7.** Verfahren nach zumindest einem der vorherigen Ansprüche,
dadurch gekennzeichnet,
daß das bei der anschließenden Desorption entstehende Desorbat bis zur Bildung einer organischen und einer wäßrigen Phase abgekühlt wird und daß die organische und die wäßrige Phase in einem Schwerkraftabscheider getrennt werden.

**8.** Verfahren nach zumindest einem der vorherigen Ansprüche,
dadurch gekennzeichnet,
daß die bei der Rückführung der wäßrigen Phase des Desorbats schließlich anfallende adsorptiv behandelte wäßrige Phase dem zu reinigenden Wasser beigegeben wird.

**9.** Verfahren nach zumindest einem der vorherigen Ansprüche,
dadurch gekennzeichnet,
daß das Adsorberharz ein Divinylbenzol/Styrol-Copolymer mit einer spezifischen Oberflache von 600 bis 1200 $m^2$/g ist.

**10.** Verfahren nach zumindest einem der vorherigen Ansprüche,
dadurch gekennzeichnet,
daß die Desorption bei 100 bis 150°C, vorzugsweise bei 110 bis 140°C, erfolgt.

**11.** Verfahren nach den Ansprüchen 1 bis 10 zur Reinigung von Grundwässern oder betrieblichen Prozeßwässern bzw. Abwässern in der chemischen Industrie.

**Claims**

**1.** A process for cleaning up waters comprising organic constituents from organic constituents using adsorber resins, the desorption of the organic constituents adsorbed on the resin being carried out using steam, characterized in that an aqueous phase which is separated off from the desorbate after the desorption of an adsorber with steam and is saturated with organic constituents is applied, without admixing other waters, to at least one organic-constituent-loaded adsorber whose adsorption cycle is completed.

**2.** A process according to claim 1, characterized in that the aqueous phase from the desorbate is passed through the adsorber during the cleanup by adsorption in countercurrent to the direction of flow of the water to be cleaned up.

**3.** A process according to either claim 1 or 2, characterized by an additional heating of the adsorber in conjunction with the steam desorption.

**4.** A process according to claim 3, characterized in that the additional heating is performed electrically, by steam or by separate heat-carrier circuits.

**5.** A process according to claim 4, characterized by a jacket heating of the adsorber or by a heated pipe coil disposed in the adsorber or by both.

**6.** A process according to at least one of the preceding claims, characterized in that the flow velocity of the aqueous phase through the loaded adsorber is less than previously the flow rate of the water to be treated.

**7.** A process according to at least one of the preceding claims, characterized in that the desorbate produced in the subsequent desorption is cooled until the formation of an organic phase and an aqueous phase and in that the organic phase and the aqueous phase are separated in a gravity separator.

**8.** A process according to at least one of the preceding claims, characterized in that the aqueous phase treated by adsorption finally arising in the recycling of the aqueous phase of the desorbate is added to the water to be cleaned up.

9. A process according to at least one of the preceding claims, characterized in that the adsorber resin is a divinylbenzene/styrene copolymer having a specific surface area of from 600 to 1200 $m^2$/g.

10. A process according to at least one of the preceding claims, characterized in that the desorption is carried out at from 100 to 150°C, preferably at from 110 to 140°C.

11. A process according to any of claims 1 to 10 for cleaning up groundwaters or industrial process waters or wastewaters in the chemical industry.

**Revendications**

1. Procédé pour débarrasser de leurs matières organiques des eaux qui en contiennent, en faisant appel à des résines adsorbantes, la désorption des contenus organiques adsorbés sur la résine s'effectuant avec de la vapeur d'eau,
caractérisé en ce qu'
après la désorption à la vapeur d'eau d'un adsorbant on dépose une phase aqueuse, séparée du produit de désorption, saturée en composants organiques, sans y mélanger d'autres phases aqueuses sur au moins un adsorbant chargé en matières organiques, et dont la vitesse d'adsorption est régulée.

2. Procédé selon la revendication 1,
caractérisé en ce que
la phase aqueuse est conduite lors de la purification par adsorption hors du produit de désorption à travers l'adsorbant à contre-courant par rapport à la direction d'écoulement de l'eau à purifier.

3. Procédé selon la revendication 1 ou 2,
caractérisé par
un chauffage supplémentaire de l'adsorbant accompagnant la désorption à la vapeur d'eau.

4. Procédé selon la revendication 3,
caractérisé en ce qu'
on procède au chauffage supplémentaire par un moyen électrique, avec de la vapeur d'eau ou au moyen de cycles caloporteurs séparés.

5. Procédé selon la revendication 4,
caractérisé par
un chauffage de l'adsorbant au moyen d'une chemise ou d'une canalisation chauffée disposée dans l'adsorbant, ou des deux.

6. Procédé selon au moins l'une des revendications précédentes,
caractérisé en ce que
la vitesse d'écoulement de la phase aqueuse à travers l'adsorbant chargé est inférieure à la vitesse d'écoulement antérieure de l'eau à traiter.

7. Procédé selon au moins une des revendications précédentes,
caractérisé en ce qu'

- on refroidit le produit de désorption qui apparaît lors de la désorption ultérieure jusqu'à la formation d'une phase organique et d'une phase aqueuse, et
- on sépare la phase organique de la phase aqueuse dans un appareil de séparation par gravité.

8. Procédé selon au moins une des revendications précédentes,
caractérisé en ce qu'
on ajoute à l'eau à purifier la phase aqueuse traitée par adsorption qui apparaît enfin lors de la réintroduction de la phase aqueuse du produit de désorption.

9. Procédé selon l'une des revendications précédentes,
caractérisé en ce que

la résine adsorbante est un copolymère divinylbenzène/styrène ayant une surface spécifique de 600 à 1200 m$^2$/g.

10. Procédé selon au moins une des revendications précédentes,
    caractérisé en ce qu'
    on conduit la désorption entre 100 et 150°C, de préférence entre 110 et 140°C.

11. Procédé selon l'une des revendications 1 à 10 de purification des eaux souterraines ou des eaux de procédé ou des eaux usées dans l'industrie chimique.

Fig. 1

Dampf Eingang

1

2

Prozeßwasser gereinigt

W

Dampf Ausgang

6

4

Prozeßwasser unbehandelt

3

P1

5

7

Desorbat org. Phase

Desorbat (wäßrige Phase)

EP 0 796 822 B1

Fig. 2

EP 0 796 822 B1

Fig. 3

Fig. 4

Fig. 4a

Fig. 5